# EUROPÄISCHE PATENTSCHRIFT

(11) **EP 1 931 161 B1**
(45) Veröffentlichungstag und Bekanntmachung des Hinweises auf die Patenterteilung: **05.05.2010**
(21) Anmeldenummer: 06025369.7
(22) Anmeldetag: 07.12.2006
(51) Int. Cl.: H04W 4/06

(54) **Verfahren zur Übermittlung von Daten in einem Mobilfunknetz mit Gruppenruf-Funktionalität**
Method for transmitting data in a cellular network with multi-address call functionality
Procédé destiné à la transmission de données dans un réseau hertzien mobile doté de la fonction d'appel en groupe

(43) Veröffentlichungstag der Anmeldung: 11.06.2008
(73) Patentinhaber: Nokia Siemens Networks GmbH & Co. KG, 81541 München (DE)
(72) Erfinder: Bergman, Ola, 74022 Baelinge (SE); Qian, Faqiang, 1210 Wien (AT)

(56) Entgegenhaltungen:
- WO-A-00/05825
- "3rd Generation Partnership Project; Technical Specification Group Core Network and Terminals; Voice Group Call Service (VGCS); Stage 2 (Release 7)" 3GPP TS 43.068 V7.5.0 (2006-09) TECHNICAL SPECIFICATION, [Online] 12. Oktober 2006 (2006-10-12), Seiten 1-149, XP002433086 Gefunden im Internet: URL:http://www.3gpp.org/ftp/Specs/html-inf o/43068.htm> [gefunden am 2007-05-10]

## Beschreibung

Die Erfindung betrifft ein Verfahren zur Übermittlung von Daten in einem Mobilfunknetz mit Gruppenruf-Funktionalität sowie ein entsprechendes Mobilfunknetz.

Aus dem Stand der Technik ist es bekannt, in einem Mobilfunknetz einen sog. Gruppenruf aufzubauen. Es handelt sich hierbei um einen entsprechenden Dienst in dem Mobilfunknetz, wobei es insbesondere bekannt ist, einen Gruppenruf zur Sprachübertragung zwischen mehreren mobilen Teilnehmern im Mobilfunknetz zu verwenden. In leitungsvermittelten Mobilfunknetzen ist hierbei der VGCS/VBS-Dienst (VGCS = Voice Group Call Service; VBS = Voice Broadcast Service) bekannt.

Das Dokument Simoco: "Radio Communications Network"; WO 00/05825A (SIMOCO INT LTD [GB]; RAYNE MARK WENTWORTH [GB] 3.February 2000 (2000-02-03) beschreibt den Aufbau und die Organisation eines Gruppenrufs mittels einer Datenbank mit geeigneten Datensätzen.

Ein Gruppenruf zeichnet sich dadurch aus, dass ein Teilnehmer Information gleichzeitig an eine Mehrzahl von anderen Teilnehmern übermittelt, wobei der Gruppenruf durch eine Gruppenruf-Referenz spezifiziert ist. Diese Gruppenruf-Referenz umfasst eine Gruppenruf-Identität sowie ein Gruppenrufgebiet. Das Gruppenrufgebiet ist wiederum durch eine oder mehrere Mobilfunkzellen spezifiziert.

Die Gruppenruf-Funktionalität kann in einer Vielzahl von Anwendungsgebieten eingesetzt werden. Beispielsweise kann diese Funktionalität bei der Durchführung von Montagearbeiten, bei denen eine Vielzahl von Personen ihre Handlungen aufeinander abstimmen müssen, verwendet werden. Ein spezieller Anwendungsfall ist z.B. die Durchführung und Überwachung von Rangiervorgängen im Bereich von Rangierbahnhöfen. Es handelt sich hierbei um eine sicherheitskritische Anwendung, bei der eine schnelle Kommunikation zwischen den Teilnehmern sichergestellt werden muss, um Unfälle durch Zusammenstöße von Zügen zu vermeiden. Deshalb ist es insbesondere bei solchen sicherheitskritischen Anwendungen wünschenswert, dass bestimmte Anwendungsdaten sehr schnell bei einem bestehenden Gruppenruf von einem sendenden Teilnehmer an alle anderen Teilnehmer übermittelt werden können.

Aufgabe der Erfindung ist es deshalb, ein Verfahren zur Übermittlung von Daten in einem Mobilfunknetz mit Gruppenruf-Funktionalität zu schaffen, bei dem bestimmte Daten während eines aufgebauten Gruppenrufs mit sehr geringer Zeitverzögerung von einem Teilnehmer an die anderen Teilnehmer übermittelt werden können.

Diese Aufgabe wird durch die unabhängigen Patentansprüche gelöst. Weiterbildungen der Erfindung sind in den abhängigen Ansprüchen definiert.

In dem erfindungsgemäßen Verfahren ist ein Gruppenruf zwischen einer Mehrzahl von mobilen Teilnehmern aufgebaut, wobei der Gruppenruf durch eine Gruppenruf-Referenz umfassend eine Gruppenruf-Identität und ein Gruppenrufgebiet mit einer oder mehreren Mobilfunkzellen spezifiziert ist. Mobile Teilnehmer sind hierbei vorzugsweise Mobilfunkendgeräte (insbesondere Mobiltelefone, Laptops, PDAs usw.), welche über eine Luftschnittstelle mit dem Kernnetz des Mobilfunknetzes kommunizieren. Ein Teilnehmer sendet hierbei bei aufgebautem Gruppenruf an die anderen Teilnehmer zu übermittelnde Daten, welche insbesondere sicherheitsrelevante und sehr schnell zu übermittelnde Daten sind. Die Daten können beispielsweise eine Nachricht betreffen, mit der mitgeteilt wird, dass bei einem Rangiermanöver ein bestimmter Zug sofort gestoppt werden soll, um einen Unfall zu vermeiden. Diese Nachricht kann beispielsweise durch eine entsprechende Anzeige auf einem Mobilfunkendgerät wiedergegeben werden und sie kann ferner ggf. aufgezeichnet werden, um einen Unfall danach zu analysieren. Die zu übermittelnden Daten werden dabei zunächst an eine erste, für eine oder mehrere Mobilfunkzellen zuständige Basisstationseinheit des Mobilfunknetzes über die Luftschnittstelle gesendet. Die erste Basisstationseinheit überprüft, für welche Mobilfunkzellen des Gruppenrufgebiets sie zuständig ist, und sendet die Daten dann unmittelbar (d.h. ohne die Daten zuvor an weitere Komponenten des Mobilfunknetzes weiterzuleiten) direkt an diese Mobilfunkzellen aus.

Das erfindungsgemäße Verfahren hat den Vorteil, dass die Daten an andere Teilnehmer des Gruppenrufs sehr schnell übermittelt werden können, da die Daten sofort beim Empfang in der Basisstation wieder an entsprechende Mobilfunkzellen des Gruppenrufgebiets ausgesendet werden. In diesem Merkmal unterscheidet sich die Erfindung vom Stand der Technik, bei dem zunächst eine Weiterleitung der Daten zu einer Mobilvermittlungsstelle erfolgt, welche anschließend die Daten wieder an die Basisstationseinheit zurücksendet. Hierdurch tritt eine große Zeitverzögerung auf, welche gemäß der Erfindung vermieden wird.

Um sicherzustellen, dass die erste Basisstationseinheit die von dem sendenden Teilnehmer gesendeten Daten auch einem Gruppenruf zuordnen kann, werden diese Daten an die erste Basisstationseinheit von dem sendenden Teilnehmer mit einer Nachricht übermittelt, welche die Gruppenruf-Referenz enthält.

Damit die erste Basisstationseinheit auch die obige Überprüfung hinsichtlich ihrer Zuständigkeit für Mobilfunkzellen des Gruppenrufgebiets durchführen kann, werden die Identitäten aller Mobilfunkzellen, für welche die erste Basisstationseinheit zuständig ist, und/oder die Gruppenruf-Referenz vor oder beim Aufbau des Gruppenrufs an die erste Basisstationseinheit übermittelt und dort lokal speichert. Insbesondere werden dabei die Identitäten aller Mobilfunkzellen, für welche die erste Basisstationseinheit zuständig ist, und/oder die Gruppenruf-Referenzen von einer der ersten Basisstationseinheit zugeordneten ersten Mobilvermittlungsstelle an die erste Basisstationseinheit gesendet, und zwar insbesondere über die aus dem Stand der Technik bekannte A-Schnittstelle in einem 3GPP-Mobilfunknetz.

In einer weiteren Ausgestaltung des erfindungsgemäßen Verfahrens leitet die erste Basisstationseinheit die an sie gesendeten Daten ferner an eine der ersten Basisstationseinheit zugeordnete erste Mobilvermittlungsstelle weiter, wobei die erste Mobilvermittlungsstelle insbesondere die bereits o.g. erste Mobilvermittlungsstelle ist, welche die Identitäten aller Mobilfunkzellen an die erste Basisstationseinheit sendet.

Um eine mehrfache Übertragung der Daten an mobile Teilnehmer des Gruppenrufs zu vermeiden, sendet die erste Mobilvermittlungsstelle die von der ersten Basisstationseinheit empfangenen Daten nicht an die erste Basisstationseinheit zurück.

In einer weiteren Ausführungsform des erfindungsgemäßen Verfahrens leitet die erste Mobilvermittlungsstelle die Daten an eine oder mehrere zweite Mobilvermittlungsstellen weiter, welche mit der ersten Mobilvermittlungsstelle verbunden sind. Hierdurch wird sichergestellt, dass die Daten nicht nur an Mobilfunkzellen des Gruppenrufgebiets weitergeleitet werden, für welche die erste Basisstationseinheit zuständig ist, sondern auch an Mobilfunknetzen von anderen Basisstationseinheiten. Dabei ermitteln die zweite oder die zweiten Mobilvermittlungsstellen, welche für Mobilfunkzellen des Gruppenrufgebiets zuständige, zweite Basisstationseinheiten ihnen zugeordnet sind, und sie senden die Daten dann an diese zweiten Basisstationseinheiten. Jede zweite Basisstationseinheit leitet die Daten anschließend an die Mobilfunkzellen des Gruppenrufgebiets weiter, für welche die jeweilige Basisstationseinheit zuständig ist.

Das oben beschriebene Verfahren wird insbesondere in einem 3GPP-Mobilfunknetz eingesetzt, insbesondere in einem GSM- und/oder UMTS-Mobilfunknetz (GSM = Global System for Mobile Communication; UMTS = Universal Mobile Telecommunication Service).

Der Gruppenruf ist in einer besonders bevorzugten Ausführungsform insbesondere ein Sprachgruppenruf, beispielsweise der bereits eingangs erwähnte VGCS/VBS-Gruppenruf. Der Gruppenruf wird vorzugsweise gemäß zumindest einem der 3GPP-Protokolle TS 44.018, TS 48.008, TS 43.068, TS 43.069 durchgeführt. Vorzugsweise läuft das Verfahren ferner in einem leitungsvermittelten Teil eines Mobilfunknetzes ab.

In einer weiteren Ausgestaltung des erfindungsgemäßen Verfahrens wird das Verfahren in einem Mobilfunknetz eingesetzt, bei dem die erste Basisstationseinheit und/oder die zweiten Basisstationseinheiten jeweils ein Base-Station-Subsystem mit einem Base-Station-Controller und mehreren Base-Transceiver-Stations umfassen. Die soeben genannten Komponenten sind hierbei hinlänglich aus dem Stand der Technik bekannte Komponenten in einem 3GPP-Mobilfunknetz. Ebenso sind die erste und/oder die zweiten Mobilvermittlungsstellen sog. Mobile-Switching-Centers, welche auch aus 3GPP-Netzen bekannt sind.

Neben dem oben beschriebenen Verfahren betrifft die Erfindung ferner ein Mobilfunknetz mit Gruppenruf-Funktionalität, in welchem zwischen einer Mehrzahl von mobilen Teilnehmern ein Gruppenruf aufbaubar ist, der durch eine Gruppenruf-Referenz umfassend eine Gruppenruf-Identität und ein Gruppenrufgebiet mit einer oder mehreren Mobilfunkzellen spezifiziert ist. Das Mobilfunknetz umfasst hierbei wenigstens eine erste, für eine oder mehrere Mobilfunkzellen zuständige Basisstationseinheit, mit welcher bei aufgebautem Gruppenruf von einem sendenden Teilnehmer an die anderen Teilnehmer zu übermittelnde Daten über eine Luftschnittstelle empfangbar sind, wobei die erste Basisstationseinheit derart ausgestaltet ist, dass sie beim Empfang solcher Daten überprüft, für welche Mobilfunkzellen des Gruppenrufgebiets sie zuständig ist, und die Daten an diese Mobilfunkzellen aussendet. Das Mobilfunknetz ist dabei vorzugsweise derart ausgestaltet, dass jede beliebige, im Vorangegangenen beschriebene Variante des erfindungsgemäßen Verfahrens mit dem Mobilfunknetz durchführbar ist.

Ausführungsbeispiele der Erfindung werden nachfolgend anhand der beigefügten Figur detailliert beschrieben.

Es zeigen:
- Fig. 1: ein Nachrichtenflussdiagramm, welches die Übermittlung von Daten in einem Mobilfunknetz gemäß einer Ausführungsform der Erfindung wiedergibt; und
- Fig. 2: ein Nachrichtenflussdiagramm analog zu Fig. 1, welches einen Nachrichtenfluss gemäß dem Stand der Technik zeigt.

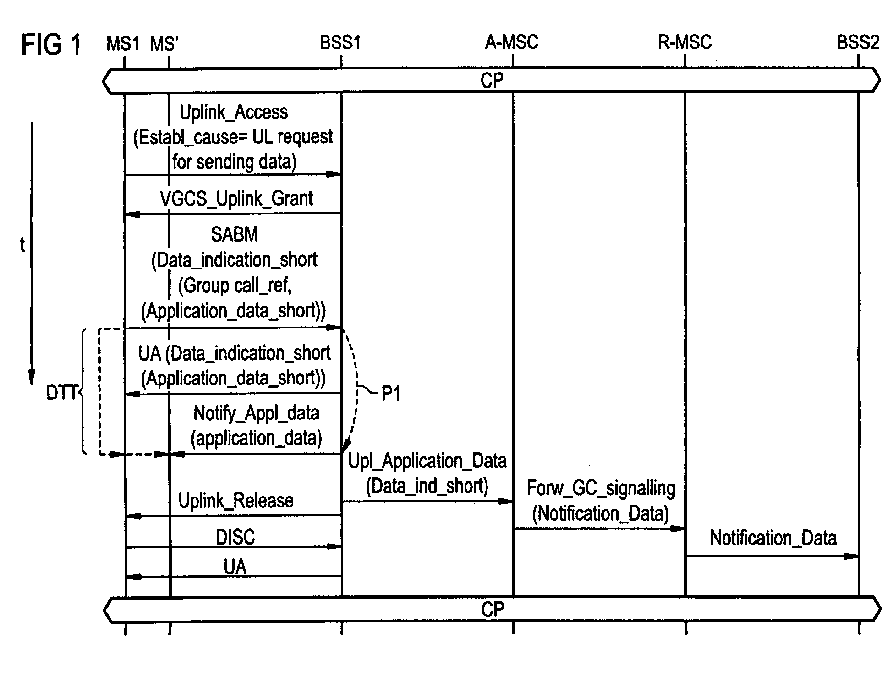

Nachfolgend wird eine Ausführungsform der Erfindung am Beispiel eines 3GPP-Mobilfunknetzes anhand der Fig. 1 beschrieben. Das betrachtete Mobilfunknetz umfasst eine Vielzahl von mobilen Teilnehmern in der Form von mobilen Stationen MS1 bzw. MS'. Die mobilen Stationen stellen hierbei Mobilfunkendgeräte dar, welche drahtlos mit anderen Endgeräten in dem Mobilfunknetz kommunizieren können. Zur Datenübertragung umfasst das Mobilfunknetz eine Vielzahl von Basisstationseinheiten in der Form von sog. Base-Station-Subsystems, welche jeweils mehrere Base-Transceiver-Stations sowie einen Base-Station-Controller umfassen. Die Base-Transceiver-Stations stellen hierbei die kleinste Einheit in dem Mobilfunknetz dar und sind Sende- und Empfangsbasisstationen, welche über die Luftschnittstelle mit Mobilfunkendgeräten kommunizieren. Der Base-Station-Controller verwaltet dabei die zu den Base-Transceiver-Stations gehörigen Mobilfunkzellen und ist über eine sog. A-bis-Schnittstelle mit den Base-Transceiver-Stations verbunden. Er stellt die eigentliche Basisstation dar, über welche Übertragungsparameter und einzelne Telefonverbindungen zu den Mobiltelefonen gesteuert werden. In dem Szenario der Fig. 1 kommunizieren hierbei Mobilfunkteilnehmer MS1 und MS' mit einer Basisstationseinheit BSS1.

In dem der Fig. 1 zugrunde liegenden Mobilfunknetz ist ferner jeder Basisstationseinheit ein sog. Mobile-Switching-Center zugeordnet, welcher der Mobilvermittlungsstelle im Sinne der Ansprüche entspricht. In Fig. 1 ist hierbei der Basisstationseinheit BSS1 der Mobile-Switching-Center A-MSC (A-MSC = Anchor Mobile Switching Center, im Folgenden auch als Anchor-MSC bezeichnet) zugeordnet. An einen Mobile-Switching-Center sind hierbei mehrere Base-Station-Subsystems einer Region angeschlossen. In dem Szenario der Fig. 1 ist dabei die Mobilvermittlungsstelle A-MSC mit der weiteren Mobilvermittlungsschnittstelle R-MSC (R-MSC = Relay Mobile Switching Center, im Folgenden auch als Relay-MSC bezeichnet) verbunden. Analog zur Mobilvermittlungsstelle A-MSC ist auch der Mobilvermittlungsstelle R-MSC wiederum eine Basisstationseinheit zugeordnet, welche in Fig. 1 die Basisstationseinheit BSS2 ist.

In Fig. 1 ist ein Gruppenruf in der Form eines sog. VGCS-Dienstes (VGCS = Voice Group Call Service) zwischen einer Mehrzahl von mobilen Teilnehmern aufgebaut. Bei dem VGCS-Gruppenruf handelt es sich um einen Sprachgruppenruf, mit dem die daran beteiligten Teilnehmer Informationen austauschen können. Insbesondere werden gesprochene Informationen eines Teilnehmers gleichzeitig an alle am Gruppenruf beteiligten anderen Teilnehmer übertragen. Für einen spezifischen Gruppenruf können dabei mehrere Mobile-Switching-Centers konfiguriert werden. Dabei übernimmt aber nur einer der Mobile-Switching-Center die Rolle des oben erwähnten Anchor-MSC. Die anderen, für den Gruppenruf konfigurierten Mobile-Switching-Center sind die ebenfalls zuvor erwähnten Relay-MSCs. In dem Anchor-MSC sind die Adressen aller Relay-MSCs gespeichert. Demgegenüber ist in einem Relay-MSC nur die Adresse des Anchor-MSC gespeichert.

Der Gruppenruf kann von einem Teilnehmer initiiert werden, der sich gegenwärtig in einer Zelle eines Relay-MSC-Bereichs oder in einer Zelle des Anchor-MSC-Bereichs befindet. Wenn der Gruppenruf aus einem Relay-MSC-Bereich initiiert wird, muss der zuständige Relay-MSC den Gruppenruf zunächst an den Anchor-MSC weiterleiten. Dann baut der Anchor-MSC den Ruf über eine sog. Conference-Unit in seinem Bereich bzw. in allen Relay-MSC-Bereichen auf. Wenn der Gruppenruf aus dem Anchor-MSC-Bereich initiiert wird, wird der Gruppenruf über den zuständigen Base-Station-Controller zu dem entsprechenden Anchor-MSC weitergeleitet. Dann baut der Anchor-MSC den Gruppenruf im gesamten Gruppenrufgebiet auf.

An dem VGCS-Ruf gemäß Fig. 1 ist der Teilnehmer MS1 sowie weitere Teilnehmer beteiligt, welche in Fig. 1 die Teilnehmer MS' sind. Ein Gruppenruf wird hierbei spezifiziert durch das Gruppenrufgebiet, welches die Mobilfunkzellen von einem oder mehrerer Basisstationseinheiten umfassen, sowie durch eine Identität des Gruppenrufs. In dem Nachrichtenflussdiagramm der Fig. 1 verläuft die Zeitachse t in vertikaler Richtung von oben nach unten, so dass der bereits aufgebaute Gruppenruf am oberen Ende des Diagramms steht und als CP bezeichnet wird (CP = Conversation proceeds).

In dem nachfolgend anhand von Fig. 1 erläuterten erfindungsgemäßen Verfahren sollen innerhalb eines Gruppenrufs spezielle Daten in der Form von sog. "Application_Data" sehr schnell von dem sendenden mobilen Teilnehmer MS1 an die anderen Teilnehmer MS' übertragen werden. Ein bevorzugter Anwendungsbereich der Erfindung ist hierbei die Koordination von Rangiervorgängen von Eisenbahnzügen in Rangierbahnhöfen. Dort ist es oftmals wünschenswert, dass die Person, welche das Rangieren von Zügen leitet, in die Möglichkeit versetzt wird, bei einem Gruppenruf mit einer Mehrzahl von am Rangiervorgang beteiligter Personen Steuerkommandos und seine eigene Identifikation an die anderen Teilnehmer des Gruppenrufs zu senden. Solche Steuerbefehle können beispielsweise sicherheitskritische Notfallbefehle, wie das Stoppen eines Zugs beim Rangieren, betreffen. Diese Steuerkommandos, welche eine Art von den o.g. Application_Data darstellen, müssen sehr schnell an die anderen Teilnehmer des Gruppenrufs übertragen werden. Nach dem Stand der Technik benötigt eine solche Übertragung jedoch viel mehr als 500 ms, wobei 500 ms bei sicherheitskritischen Befehlen gefordert werden. Diese lange Übertragungszeit kommt dadurch zustande, dass die Application_Data, welche von einem mobilen Teilnehmer an die Basisstationseinheit gesendet werden, von dort immer an die der Basisstationseinheit zugeordneten Mobilvermittlungsstelle weitergeleitet werden, da erst in der Mobilvermittlungsstelle festgestellt wird, an welche Mobilfunkzellen des Mobilfunknetzes der Gruppenruf gesendet werden soll. Von den Mobilvermittlungsstellen werden die Daten dann wieder an die Mobilfunkzellen des Gruppenrufs in dem Gebiet der Basisstationseinheit zurückgesendet.

Im Anwendungsfall des Gruppenrufs bei Rangiervorgängen ist es fast immer der Fall, dass die am Rangiervorgang beteiligten Teilnehmer sich in Mobilfunkzellen befinden, die zu einer einzigen Basisstationseinheit gehören. Erfindungsgemäß wurde deshalb erkannt, dass auf den zeitaufwändigen Vorgang des Weiterleitens von Application_Data an eine Mobilvermittlungsstelle und eine Zurücksendung dieser Application_Data an die Basisstationseinheit verzichtet werden kann und die Application_Data an die anderen mobilen Teilnehmer direkt ausgehend von der Basisstationseinheit gesendet werden können. Um dies zu erreichen, sind in dem Verfahren gemäß Fig. 1 die Identitäten der Mobilfunkzellen, für welche die Basisstationseinheit BSS1 zuständig ist, vor bzw. beim Aufbau des Gruppenrufs bereits in der BSS1 gespeichert. Ebenso ist die Referenz des Gruppenrufs (in Fig. 1 bezeichnet als Group_call_ref) in der BSS1 hinterlegt. Dies wird beispielsweise dadurch ermöglicht, dass in dem Netzwerk der Fig. 1 das sog. Merkmal des A-Interface-Resource-Sharings unterstützt wird. Gemäß diesem Merkmal werden über die sog. A-Schnittstelle zwischen der BSS1 und dem A-MSC die Identitäten der BSS1 zugeordneten Mobilfunkzellen sowie die Group_call_ref der Basisstationseinheit BSS1 bereitgestellt.

Zum Übermitteln der Application_Data wird zunächst von dem sendenden mobilen Teilnehmer MS1 ein sog. Uplink_Access an die für ihn zuständige Basisstationseinheit BSS1 gesendet. Anschließend erfolgt eine Rückmeldung der BSS1 in der Form eines sog. VGCS_Uplink_Grants, woraufhin der mobile Teilnehmer MS1 schließlich die Application_Data in der Form einer sog. SABM-Nachricht (SABM = Set Asynchronous Balanced Mode) an die BSS1 übermittelt. Es folgt daraufhin eine Rückmeldung in der Form einer UA-Nachricht an den MS1, und schließlich werden die Application_Data unmittelbar von der BSS1 mit der Nachricht Notify_Appl_Data an alle mobilen Teilnehmer MS' gesendet, welche zu der VGCS-Rufgruppe gehören und sich in Mobilfunkzellen befinden, die zu dem Gruppenrufgebiet des VGCS-Gruppenrufs im Gebiet der Basisstationseinheit BSS1 gehören. Diese direkte Übermittlung der Application_Data ist in Fig. 1 mit dem geschwungenen gestrichelten Pfeil P1 angedeutet. Die Zeitdauer, um die Application_Data von dem mobilen Teilnehmer MS1 an die anderen Teilnehmer MS' zu übermitteln, ist in Fig. 1 als DTT wiedergegeben. Die direkte Übermittlung der Application_Data erfolgt im Base-Station-Controller der Basisstationseinheit BSS1, indem der Base-Station-Controller die mit der SABM-Nachricht empfangende Group_call_ref dahingehend analysiert, für welche Identitäten von Mobilfunkzellen die BSS1 zuständig ist, welche auch zu dem Gruppenrufgebiet gemäß der Group_call_ref gehören. Diese Analyse ist möglich, da - wie oben erwähnt - die Identitäten der Mobilfunkzellen, für welche die BSS1 zuständig ist, von der Mobilvermittlungsstelle A-MSC an die BSS1 bzw. an den entsprechenden Base-Station-Controller vorab übermittelt wurden und dort gespeichert sind.

Die BSS1 überträgt mit der Nachricht Upl_Application_Data die Application_Data jedoch auch an die Mobilvermittlungsstelle A-MSC, welche anschließend ermittelt, welche weiteren Mobilvermittlungsstellen Basisstationseinheiten verwalten, welche für weitere Mobilfunkzellen des Gruppenrufsgebiets des Gruppenrufs zuständig sind. An diese weiteren Mobilvermittlungsstellen werden die Application_Data weitergeleitet. Diese Weiterleitung der Application_Data ist in Fig. 1 exemplarisch wiedergegeben. Insbesondere werden über die Nachricht Forw_GC_signalling die Application_Data an die mit der Mobilvermittlungsstelle A-MSC verbundene Mobilvermittlungsstelle R-MSC weitergeleitet, welche die Application_Data schließlich über die Nachricht Notification_Data an eine entsprechende, der R-MSC zugeordnete Basisstationseinheit BSS2 sendet, die wiederum die Application_Data mit der Nachricht Notify_Appl_Data (nicht in Fig. 1 gezeigt) an entsprechende Mobilfunkzellen des Gruppenrufgebiets sendet. Um zu vermeiden, dass die BSS1 die Application_Data nach dem Aussenden der Nachricht Notify_Appl_Data nochmals zu einem späteren Zeitpunkt aussendet, ist in der Mobilvermittlungsstelle A-MSC ein entsprechendes Flag gesetzt. Dieses Flag verhindert, dass die entsprechende Nachricht Notification_Data nicht an die Basisstationseinheit BSS1 gesendet wird, von der die Application_Data in der A-MSC empfangen wurden.

Neben der Weiterleitung der Application_Data an weitere Mobilvermittlungsstellen werden parallel zwischen dem mobilen Teilnehmer MS1 und der zugehörigen Basisstationseinheit BSS1 die Nachrichten Uplink_Release, DISC und UA ausgetauscht. Nach dem Austausch dieser Nachrichten ist das Verfahren zur Übertragung der Application_Data beendet, und es folgt schließlich wieder die normale Sprachkommunikation, was wiederum durch das Bezugszeichen CP am unteren Ende der Fig. 1 angedeutet ist.

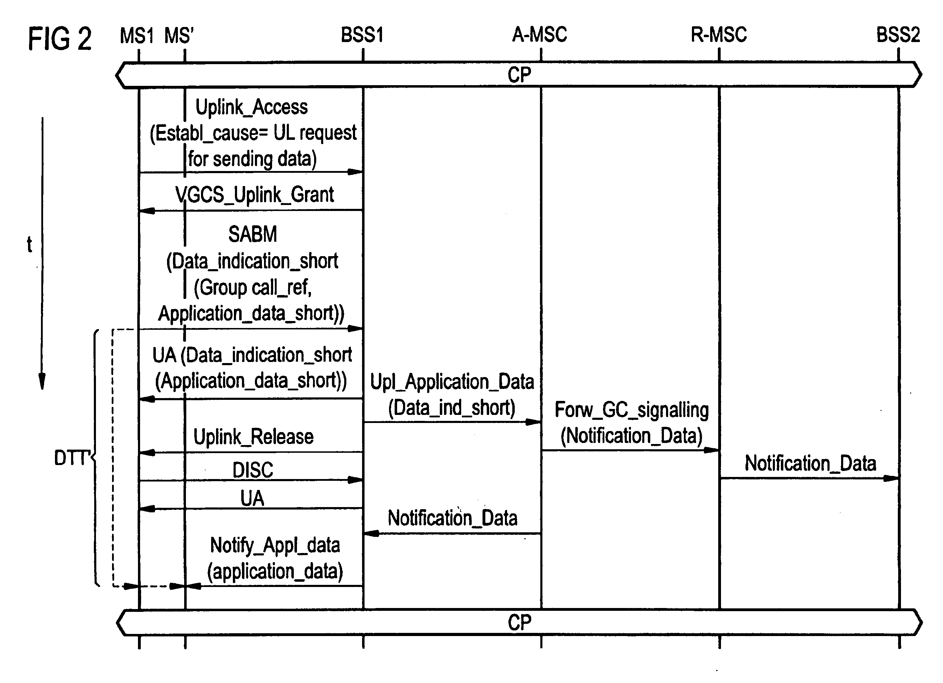

Es sei angemerkt, dass alle zuvor beschriebenen Nachrichten an sich aus dem Stand der Technik bekannte Nachrichten sind, so dass auf ihre genaue Bedeutung und ihren genauen Inhalt nicht eingegangen wurde. Insbesondere sind die obigen Nachrichten in den 3GPP-Standards TS 44.018, TS 48.008, TS 43.068 sowie TS 43.069 beschrieben. Der Unterschied zum Stand der Technik besteht hierbei nicht in den Nachrichten selbst, sondern in den Zeitpunkten, zu denen Nachrichten versendet werden. Dies wird auch nochmals durch Fig. 2 verdeutlicht, welche den Nachrichtenfluss gemäß dem Stand der Technik wiedergibt. Darüber hinaus besteht der Unterschied zum Stand der Technik darin, dass der Base-Station-Controller einer Basisstationseinheit eine aktive Funktion dadurch übernimmt, dass er die empfangenen Daten sofort und direkt an die zugehörigen Mobilfunkzellen verteilt. Der Base-Station-Controller muss somit nicht mehr auf von dem Mobile-Switching-Center kommende Nachrichten warten.

In Fig. 2 ist analog zu Fig. 1 die Datenübertragungszeit zwischen dem Aussenden der Application_Data von dem mobilen Teilnehmer MS1 mittels der SABM-Nachricht bis zum Empfang der Daten bei den anderen mobilen Teilnehmern MS' mittels der Notify_Appl_Data-Nachricht wiedergegeben. Die Zeitspanne ist als DTT' in Fig. 2 eingezeichnet und man erkennt deutlich, dass die Zeitspanne länger ist als die entsprechende Zeitspanne DTT in Fig. 1. Dies liegt daran, dass die Basisstationseinheit BSS1 im Stand der Technik die Funktionalität bzw. das Arbeitsverfahren der direkten Verteilung der Daten nicht besitzt. Die BSS1 muss erst die Application_Data an die Mobilvermittlungsstelle A-MSC weiterleiten. Diese Mobilvermittlungsstelle enthält dann die Information bezüglich der Mobilfunkzellen, für welche die ihr zugeordneten Basisstationen zuständig sind, und sendet daraufhin die Application_Data in der Form der Nachricht Notification_Data an die BSS1, welche die Application_Data schließlich in der Form der Nachrichten Notify_Appl_Data an die mobilen Teilnehmer MS' weiterleitet, welche sich in den entsprechenden Mobilfunkzellen des Gruppenrufgebiets befinden.

Wie sich aus der vorangegangenen Beschreibung ergibt, weist das erfindungsgemäße Verfahren gemäß Fig. 2 gegenüber Fig. 1 den deutlichen Vorteil auf, dass Applikationsdaten in wesentlich kürzerer Zeit an solche mobilen Teilnehmer übertragen werden können, welche sich in Mobilfunkzellen befinden, die zu der gleichen Basisstationseinheit wie der sendende mobile Teilnehmer gehören. Insbesondere liegt die Datenübertragungszeit DTT in Fig. 1 bei ungefähr 200 ms, wohingegen die Übertragungszeit DTT' gemäß dem Stand der Technik wesentlich länger ist.

## Patentansprüche

1. Verfahren zur Übermittlung von Daten in einem Mobilfunknetz mit Gruppenruf-Funktionalität, wobei zwischen einer Mehrzahl von mobilen Teilnehmern (MS1, MS') ein Gruppenruf aufgebaut ist, der durch eine Gruppenruf-Referenz umfassend eine Gruppenruf-Identität und ein Gruppenrufgebiet mit einer oder mehreren Mobilfunkzellen spezifiziert ist, bei dem:
a) ein sendender Teilnehmer (MS1) bei aufgebautem Gruppenruf an die anderen Teilnehmer (MS') zu übermittelnde Daten an eine erste, für eine oder mehrere Mobilfunkzellen zuständige Basisstationseinheit (BSS1) des Mobilfunknetzes über eine Luftschnittstelle sendet;
b) die erste Basisstationseinheit (BSS1) überprüft, welche Mobilfunkzellen des Gruppenrufgebiets ihr zugeordnet sind, und die Daten an diese Mobilfunkzellen aussendet.

2. Verfahren nach Anspruch 1, bei dem die Daten von dem sendenden Teilnehmer (MS1) an die erste Basisstationseinheit (BSS1) mit einer Nachricht gesendet werden, welche die Gruppenruf-Referenz enthält.

3. Verfahren nach einem der vorhergehenden Ansprüche, bei dem die Identitäten aller Mobilfunkzellen, für welche die erste Basisstationseinheit (BSS1) zuständig ist, und/oder die Gruppenruf-Referenz vor oder beim Aufbau des Gruppenrufs an die erste Basisstationseinheit (BSS1) übermittelt werden und dort lokal gespeichert werden.

4. Verfahren nach Anspruch 3, bei dem die Identitäten aller Mobilfunkzellen, für welche die erste Basisstationseinheit (BSS1) zuständig ist, und/oder die Gruppenruf-Referenz von einer der ersten Basisstationseinheit (BSS1) zugeordneten ersten Mobilvermittlungsstelle (A-MSC) an die erste Basisstationseinheit (BSS1) gesendet werden, insbesondere über eine A-Schnittstelle in einem 3GPP-Mobilfunknetz.

5. Verfahren nach einem der vorhergehenden Ansprüche, bei dem die erste Basisstationseinheit (BSS1) die in Schritt a) an sie gesendeten Daten ferner an eine der ersten Basisstationseinheit (BSS1) zugeordnete erste Mobilvermittlungsstelle (A-MSC) weiterleitet, wobei die der ersten Basisstationseinheit (BSS1) zugeordnete erste Mobilvermittlungsstelle (A-MSC) insbesondere die in Anspruch 4 definierte erste Mobilvermittlungsstelle (A-MSC) ist.

6. Verfahren nach Anspruch 5, bei dem die erste Mobilvermittlungsstelle (A-MSC) die von der ersten Basisstationseinheit (BSS1) empfangenen Daten nicht an die erste Basisstationseinheit (BSS1) zurücksendet.

7. Verfahren nach einem der vorhergehenden Ansprüche, bei dem die erste Mobilvermittlungsstelle (A-MSC) die Daten an eine oder mehrere zweite Mobilvermittlungsstellen (R-MSC) weiterleitet, welche mit der ersten Mobilvermittlungsstelle (A-MSC) verbunden sind.

8. Verfahren nach Anspruch 7, bei dem die zweite oder zweiten Mobilvermittlungsstellen (R-MSC) ermitteln, welche für Mobilfunkzellen des Gruppenrufgebiets zuständige, zweite Basisstationseinheiten (BSS2) ihnen zugeordnet sind und die Daten an diese zweiten Basisstationseinheiten (BSS2) weiterleiten, wobei eine jeweilige zweite Basisstationseinheit (BSS2) die Daten anschließend in die Mobilfunkzellen des Gruppenrufgebiets, für welche die jeweilige zweite Basisstationseinheit (BSS2) zuständig ist, aussendet.

9. Verfahren nach einem der vorhergehenden Ansprüche, bei dem die zu übermittelnden Daten vorbestimmte Applikationsdaten sind, insbesondere auf der Anzeige eines Mobilfunkendgeräts, vorzugsweise eines Mobiltelefons, Laptops oder PDAs, wiedergebbare Informationen.

10. Verfahren nach einem der vorhergehenden Ansprüche, bei dem das Verfahren in einem 3GPP-Mobilfunknetz eingesetzt wird, insbesondere in einem GSM- und/oder UMTS-Mobilfunknetz.

11. Verfahren nach einem der vorhergehenden Ansprüche, bei dem der Gruppenruf ein Sprachgruppenruf ist, insbesondere ein VGCS/VBS-Gruppenruf.

12. Verfahren nach Anspruch 10 und 11, bei dem der Gruppenruf gemäß zumindest einem der 3GPP-Protokolle TS 44.018, TS 48.008, TS 43.068, TS 43.069 abläuft.

13. Verfahren nach einem der vorhergehenden Ansprüche, bei dem das Verfahren in einem leitungsvermittelten Teil eines Mobilfunknetzes eingesetzt wird.

14. Verfahren nach einem der vorhergehenden Ansprüche, bei dem das Verfahren in einem Mobilfunknetz eingesetzt wird, bei dem die erste Basisstationseinheit (BSS1) und/oder die zweiten Basisstationseinheiten (BSS2) jeweils ein Base-Station-Subsystem mit einem Base-Station-Controller und mehreren Base-Transceiver-Stations umfassen.

15. Verfahren nach einem der vorhergehenden Ansprüche, bei dem die erste und/oder die zweiten Mobilvermittlungsstellen (A-MSC, R-MSC) Mobile-Switching-Centers sind.

16. Mobilfunknetz mit Gruppenruf-Funktionalität, in welchem zwischen einer Mehrzahl von mobilen Teilnehmern (MS1, MS') ein Gruppenruf aufbaubar ist, der durch eine Gruppenruf-Referenz umfassend eine Gruppenruf-Identität und ein Gruppenrufgebiet mit einer oder mehreren Mobilfunkzellen spezifiziert ist, umfassend:
wenigstens eine erste, für eine oder mehrere Mobilfunkzellen zuständige Basisstationseinheit (BSS1), mit welcher bei aufgebautem Gruppenruf von einem sendenden Teilnehmer (MS1) an die anderen Teilnehmer (MS') zu übermittelnde Daten über eine Luftschnittstelle empfangbar sind, wobei die erste Basisstationseinheit (BSS1) derart ausgestaltet ist, dass sie beim Empfang solcher Daten überprüft, welche Mobilfunkzellen des Gruppenrufgebiets ihr zugeordnet sind, und die Daten an diese Mobilfunkzellen aussendet.

17. Mobilfunknetz nach Anspruch 16, welches derart ausgestaltet ist, das ein Verfahren nach einem der Ansprüche 2 bis 15 in dem Mobilfunknetz durchführbar ist.

## Claims

1. Method for transmitting data in a mobile radio network with group call functionality, wherein a plurality of mobile subscribers (MS1, MS') have a group call set up between them which is specified by a group call reference comprising a group call identity and a group call area with one or more mobile radio cells, in which:
a) when a group call has been set up, a sending subscriber (MS1) sends data which are to be transmitted to the other subscribers (MS') to a first base station unit (BSS1), which is responsible for one or more mobile radio cells, in the mobile radio network via an air interface;
b) the first base station unit (BSS1) checks which mobile radio cells in the group call area are associated with it and sends the data to these mobile radio cells.

2. Method according to Claim 1, in which the data are sent from the sending subscriber (MS1) to the first base station unit (BSS1) using a message which contains the group call reference.

3. Method according to one of the preceding claims, in which the identities of all the mobile radio cells for which the first base station unit (BSS1) is responsible and/or the group call reference are transmitted to the first base station unit (BSS1) and stored locally therein before or during setup of the group call.

4. Method according to Claim 3, in which the identities of all the mobile radio cells for which the first base station unit (BSS1) is responsible and/or the group call reference are sent from a first mobile switching centre (A-MSC) associated with the first base station unit (BSS1) to the first base station unit (BSS1), particularly via an A interface in a 3GPP mobile radio network.

5. Method according to one of the preceding claims, in which the first base station unit (BSS1) also forwards the data sent to it in step a) to a first mobile switching centre (A-MSC) associated with the first base station unit (BSS1), wherein the first mobile switching centre (A-MSC) associated with the first base station unit (BSS1) is particularly the first mobile switching centre (A-MSC) defined in Claim 4.

6. Method according to Claim 5, in which the first mobile switching centre (A-MSC) does not return the data received from the first base station unit (BSS1) to the first base station unit (BSS1) .

7. Method according to one of the preceding claims, in which the first mobile switching centre (A-MSC) forwards the data to one or more second mobile switching centres (R-MSC) which is/are connected to the first mobile switching centre (A-MSC).

8. Method according to Claim 7, in which the second mobile switching centre(s) (R-MSC) ascertain(s) which second base station units (BSS2) which are responsible for mobile radio cells in the group call area are associated with it/them and forward(s) the data to said second base station units (BSS2), wherein a respective second base station unit (BSS2) then sends the data to those mobile radio cells in the group call area for which the respective second base station unit (BSS2) is responsible.

9. Method according to one of the preceding claims, in which the data to be transmitted are predetermined application data, particularly information which can be reproduced on the display of a mobile radio terminal, preferably a mobile telephone, laptop or PDA.

10. Method according to one of the preceding claims, in which the method is used in a 3GPP mobile radio network, particularly in a GSM and/or UMTS mobile radio network.

11. Method according to one of the preceding claims, in which the group call is a voice group call, particularly a VGCS/BVS group call.

12. Method according to Claims 10 and 11, in which the group call proceeds on the basis of at least one of the 3GPP protocols TS 44.018, TS 48.008, TS 43.068, TS 43.069.

13. Method according to one of the preceding claims, in which the method is used in a circuit-switched portion of a mobile radio network.

14. Method according to one of the preceding claims, in which the method is used in a mobile radio network in which the first base station unit (BSS1) and/or the second base station units (BSS2) respectively comprise(s) a base station subsystem with a base station controller and a plurality of base transceiver stations.

15. Method according to one of the preceding claims, in which the first and/or second mobile switching centre(s) (A-MSc, R-MSC) is/are (a) mobile switching centre(s).

16. A mobile radio network with group call functionality in which a plurality of mobile subscribers (MS1, MS') can have a group call set up between them which is specified by a group call reference comprising a group call identity and a group call area with one or more mobile radio cells, comprising:
at least one first base station unit (BSS1) which is responsible for one or more mobile radio cells and which can be used to receive data which are to be transmitted from a sending subscriber (MS1) to the other subscribers (MS') via an air interface when a group call has been set up, wherein the first base station unit (BSS1) is designed such that upon receiving such data it checks which mobile radio cells in the group call area are associated with it and sends the data to these mobile radio cells.

17. Mobile radio network according to Claim 16, which is designed such that a method according to one of Claims 2 to 15 can be performed in the mobile radio network.

## Revendications

1. Procédé de transmission de données dans un réseau radio mobile doté de la fonction d'appel de groupe, un appel de groupe étant établi entre une pluralité d'abonnés mobiles (MS1, MS'), lequel appel de groupe est spécifié par une référence d'appel de groupe comprenant une identité d'appel de groupe et une zone d'appel de groupe avec une ou plusieurs cellules radio mobiles, dans lequel :
a) lorsque l'appel de groupe est établi, un abonné émetteur (MS1) envoie des données à transmettre aux autres abonnés (MS') à une première unité de station de base (BSS1) responsable d'une ou de plusieurs cellules radio mobiles du réseau radio mobile par l'intermédiaire d'une interface radio ;
b) la première unité de station de base (BSS1) vérifie quelles cellules radio mobiles de la zone d'appel de groupe lui sont attribuées et envoie les données à ces cellules radio mobiles.

2. Procédé selon la revendication 1, dans lequel les données sont envoyées par l'abonné émetteur (MS1) à la première unité de station de base (BSS1) avec un message contenant la référence d'appel de groupe.

3. Procédé selon une des revendications précédentes, dans lequel les identités de toutes les cellules radio mobiles desquelles la première unité de station de base (BSS1) est responsable et/ou la référence d'appel de groupe sont transmises à la première unité de station de base (BSS1) avant ou durant l'établissement de l'appel de groupe et y sont stockées localement.

4. Procédé selon la revendication 3, dans lequel les identités de toutes les cellules radio mobiles desquelles la première unité de station de base (BSS1) est responsable et/ou la référence d'appel de groupe sont envoyées à la première unité de station de base (BSS1) par un premier centre de commutation mobile (A-MSC) attribué à la première unité de station de base (BSS1), en particulier par l'intermédiaire d'une interface A dans un réseau radio mobile 3GPP.

5. Procédé selon une des revendications précédentes, dans lequel la première unité de station de base (BSS1) retransmet les données lui ayant été envoyées durant l'étape a) également à un premier centre de commutation mobile (A-MSC) attribué à la première unité de station de base (BSS1), le premier centre de commutation mobile (A-MSC) attribué à la première unité de station de base (BSS1) étant en particulier le premier centre de commutation mobile (A-MSC) défini dans la revendication 4.

6. Procédé selon la revendication 5, dans lequel le premier centre de commutation mobile (A-MSC) ne renvoie pas à la première unité de station de base (BSS1) les données reçues de la première unité de station de base (BSS1).

7. Procédé selon une des revendications précédentes, dans lequel le premier centre de commutation mobile (A-MSC) retransmet les données à un ou plusieurs deuxièmes centres de commutation mobile (R-MSC), reliés au premier centre de commutation mobile (A-MSC).

8. Procédé selon la revendication 7, dans lequel le ou les deuxièmes centres de commutation mobile (R-MSC) déterminent quelles deuxièmes unités de station de base (BSS2) responsables de cellules radio mobiles de la zone d'appel de groupe leur sont attribuées et retransmettent les données à ces deuxièmes unités de station de base (BSS2), une deuxième unité de station de base concernée (BSS2) émettant ensuite les données dans les cellules radio mobiles de la zone d'appel de groupe, desquelles la deuxième unité de station de base concernée (BSS2) est responsable.

9. Procédé selon une des revendications précédentes, dans lequel les données à transmettre sont des données d'application prédéterminées, en particulier des informations pouvant être reproduites sur l'écran d'un terminal radio mobile, de préférence d'un téléphone mobile, d'un ordinateur portable ou d'un PDA.

10. Procédé selon une des revendications précédentes, dans lequel le procédé est utilisé dans un réseau radio mobile 3GPP, en particulier dans un réseau radio mobile GSM et/ou UMTS.

11. Procédé selon une des revendications précédentes, dans lequel l'appel de groupe est un appel de groupe vocal, en particulier un appel de groupe VGCS/VBS.

12. Procédé selon les revendications 10 et 11, dans lequel l'appel de groupe s'exécute selon au moins un des protocoles 3GPP TS 44.018, TS 48.008, TS 43.068, TS 43.069.

13. Procédé selon une des revendications précédentes, dans lequel le procédé est utilisé dans une partie de commutation de circuits d'un réseau radio mobile.

14. Procédé selon une des revendications précédentes, dans lequel le procédé est utilisé dans un réseau radio mobile dans lequel la première unité de station de base (BSS1) et/ou les deuxièmes unités de station de base (BSS2) comprennent chacune un Base Station Subsystem avec un Base Station Controller et plusieurs Base Transceiver Stations.

15. Procédé selon une des revendications précédentes, dans lequel le premier et/ou les deuxièmes centres de commutation mobile (A-MSC, R-MSC) sont des Mobile Switching Centers.

16. Réseau radio mobile doté de la fonction d'appel de groupe, dans lequel un appel de groupe peut être établi entre une pluralité d'abonnés mobiles (MS1, MS'), lequel appel de groupe est spécifié par une référence d'appel de groupe comprenant une identité d'appel de groupe et une zone d'appel de groupe avec une ou plusieurs cellules radio mobiles, comprenant :
au moins une première unité de station de base (BSS1) responsable d'une ou de plusieurs cellules radio mobiles, laquelle permet, lorsque l'appel de groupe est établi, de recevoir des données à transmettre par un abonné émetteur (MS1) aux autres abonnés (MS') par l'intermédiaire d'une interface radio, la première unité de station de base (BSS1) étant configurée de telle manière qu'elle vérifie à la réception de telles données quelles cellules radio mobiles de la zone d'appel de groupe lui sont attribuées et envoie les données à ces cellules radio mobiles.

17. Réseau radio mobile selon la revendication 16, lequel est configuré de telle manière qu'un procédé selon une des revendications 2 à 15 peut être mis en oeuvre dans le réseau radio mobile.
